# EUROPEAN PATENT SPECIFICATION

(11) **EP 4 390 466 B1**
(45) Date of publication and mention of the grant of the patent: **05.08.2026**
(21) Application number: 22913260.0
(22) Date of filing: 30.06.2022
(51) Int. Cl.: G01V 1/42

(54) **VSP-BASED DEPTH DOMAIN SEISMIC PROFILE HORIZON CALIBRATION METHOD AND APPARATUS**
VSP-BASIERTES PEGELKALIBRIERUNGSVERFAHREN UND VORRICHTUNG FÜR SEISMISCHES TIEFENDOMÄNENPROFIL
PROCÉDÉ ET APPAREIL DE CALIBRATION DE NIVEAU BASÉ SUR PROFIL SISMIQUE VERTICAL (VSP) POUR PROFIL SISMIQUE DE DOMAINE DE PROFONDEUR

(30) Priority: 30.12.2021 CN 202111654323
(43) Date of publication of application: 26.06.2024
(73) Proprietor: China National Petroleum Corporation, Beijing 100007 (CN); BGP Inc., China National Petroleum Corporation, Hebei 072751 (CN)
(72) Inventor: LI, Yanpeng, Baoding, Hebei 072751 (CN); CHEN, Yuanzhong, Baoding, Hebei 072751 (CN); WANG, Jing, Baoding, Hebei 072751 (CN); JIN, Qihu, Baoding, Hebei 072751 (CN)
(74) Representative: Petraz, Gilberto Luigi
(86) International application number: PCT/CN2022/102935
(87) International publication number: WO 2023/123971

(56) References cited:
- CN-A- 101 071 175
- CN-A- 101 071 175
- CN-A- 101 630 014
- CN-A- 106 094 027
- CN-A- 106 094 027
- CN-A- 109 765 615
- CN-A- 109 765 615
- CN-A- 111 323 813
- US-A- 6 131 694
- US-A1- 2006 265 132
- US-A1- 2021 103 068

## Description

### Field of the Invention

The present disclosure relates to the technical field of seismic exploration data interpretation, in particular to a VSP-based depth domain seismic profile horizon calibration method, a VSP-based depth domain seismic profile horizon calibration apparatus and a computer readable storage medium.

### Background of the Invention

With the continuous development of science and technology, more and more technologies have been applied to the technical field of seismic exploration, such as a borehole seismic exploration technology based on a vertical seismic profile (VSP). This technology accurately obtains seismic wavefields in a depth domain by placing a plurality of sensors in a well.

In the application process, since the sensors are placed in the well to receive data, which avoids the influence of near surface, and has significant advantages such as a high signal-to-noise ratio, a rich wavefield, and an accurate time-depth relationship, so VSPs are widely used to obtain formation velocity and other information, and also for accurate horizon calibration of surface seismic profiles.

However, in the actual application process, existing horizon calibration is generally carried out on a time domain profile, with the gradual application and promotion of a depth migration technology, people put forward higher requirements for the accuracy of depth calibration, but an existing technology often adopts a method of performing time-depth conversion based on a vertical seismic corridor stack profile, or utilizes a depth domain synthetic record from well-logging data for calibration, its calibration accuracy cannot meet the needs of current technicians.

CN-A-101071175 and US-A1-2021/103068 disclose a VSP-based depth domain seismic profile horizon calibration method as of the preamble of claim 1, and a VSP-based depth domain seismic profile horizon calibration apparatus as of the preamble of claim 4.

### Summary of the Invention

The invention is identified in the appended claims.

In order to overcome the above technical problems in the prior art, an embodiment of the present disclosure provides a VSP-based depth domain seismic profile horizon calibration method. Upgoing wave data in seismic data is extracted by analyzing the seismic data of the depth domain, accurate reflection information of the depth domain in a formation is determined according to the upgoing wave data, and a profile of the depth domain is further accurately calibrated, so that calibration accuracy is improved, and actual needs are met.

In order to achieve the above aims, the present invention provides a VSP-based depth domain seismic profile horizon calibration method. The method includes: obtaining VSP wavefield data of a depth domain; determining first arrival time information on the basis of the VSP wavefield data; processing the VSP wavefield data on the basis of a preset filtering method and the first arrival time information to obtain upgoing wave data; generating a zero offset profile of the depth domain on the basis of the upgoing wave data; and calibrating, on the basis of the zero offset profile, a depth-domain profile to be calibrated, so as to generate a corresponding calibration result. Generating the zero offset profile of the depth domain on the basis of the upgoing wave data includes: determining a plurality of preset output depth positions in the depth domain; determining a second time window for processing the upgoing wave on the basis of the first arrival time information; extracting the amplitude of the upgoing wave data on the plurality of preset output depth positions on the basis of the second time window to obtain the upgoing wave amplitude information; extracting the upgoing wave amplitude information to obtain a plurality of corresponding depth-domain data, wherein the upgoing wave amplitude information is in one-to-one correspondence to the plurality of preset output depth positions; and processing the plurality of depth-domain data on the basis of the preset multichannel filtering method to obtain the zero offset profile of the depth domain.

Optionally, the preset filtering method includes a median filtering method and a mean filtering method, and processing the VSP wavefield data on the basis of a preset filtering method and the first arrival time information to obtain upgoing wave data includes: processing the VSP wavefield data on the basis of the median filtering method or the mean filtering method to determine a corresponding upgoing wave and downgoing wave; determining a first time window on the basis of the first arrival time information; processing the downgoing wave on the basis of the first time window to obtain a downgoing wavelet; executing deconvolution processing on the upgoing wave in data after wavefield separation on the basis of the downgoing wavelet to obtain deconvoluted data; and executing amplitude compensation processing on the deconvoluted data to obtain the upgoing wave data.

Optionally, calibrating, on the basis of the zero offset profile, a depth-domain profile to be calibrated, so as to generate a corresponding calibration result includes: determining the to-be-calibrated depth-domain profile; determining a depth error between the zero offset profile and the to-be-calibrated depth-domain profile and a corresponding relationship of reflection characteristics; and analyzing the depth error and the corresponding relationship of the reflection characteristics to generate the corresponding calibration result, wherein the calibration result includes depth accuracy evaluation information of the profile of the depth domain and corresponding correction suggestion information.

Correspondingly, the present inventionfurther provides a VSP-based depth domain seismic profile horizon calibration apparatus, and the apparatus includes: a borehole seismic wavefield obtaining unit, configured to obtain VSP wavefield data of a depth domain; a first arrival time obtaining unit, configured to determine first arrival time information on the basis of the VSP wavefield data; a preprocessing unit, configured to process the VSP wavefield data on the basis of a preset filtering method and the first arrival time information to obtain upgoing wave data; a profile information generating unit, configured to generate a zero offset profile of the depth domain on the basis of the upgoing wave data; and a calibrating unit, configured to calibrate, on the basis of the zero offset profile, a depth-domain profile to be calibrated, so as to generate a corresponding calibration result. The profile information generating unit comprises: a depth domain amplitude value extracting module, configured to: determine a plurality of preset output depth positions in the depth domain; determine a second time window for processing the upgoing wave on the basis of the first arrival time information; and extract the amplitude of the upgoing wave data on the plurality of preset output depth positions on the basis of the second time window to obtain the upgoing wave amplitude information; and a filtering module, configured to: extract the upgoing wave amplitude information to obtain a plurality of corresponding depth-domain data, wherein the upgoing wave amplitude information is in one-to-one correspondence to the plurality of preset output depth positions; and process the plurality of depth-domain data on the basis of the preset multichannel filtering method to obtain the zero offset profile of the depth domain.

Optionally, the preset filtering method includes a median filtering method and a mean filtering method, and the preprocessing unit includes: a wavefield separating module, configured to process the VSP wavefield data on the basis of the median filtering method or the mean filtering method to determine a corresponding upgoing wave and downgoing wave; a first time window determining module, configured to determine a first time window on the basis of the first arrival time information; a wavelet obtaining module, configured to process the downgoing wave on the basis of the first time window to obtain a downgoing wavelet; a wavelet deconvolution module, configured to execute deconvolution processing on the upgoing wave in data after wavefield separation on the basis of the downgoing wavelet to obtain deconvoluted data; and an amplitude compensating module, configured to execute amplitude compensation processing on the deconvoluted data to obtain the upgoing wave data.

Optionally, the calibrating unit is specifically configured to: determine the to-be-calibrated depth-domain profile; determine a depth error between the zero offset profile and the to-be-calibrated depth-domain profile and a corresponding relationship of reflection characteristics; and analyzing the depth error and the corresponding relationship of the reflection characteristics to generate the corresponding calibration result, wherein the calibration result includes depth accuracy evaluation information of the depth-domain profile and corresponding correction suggestion information.

On the other hand, the present invention further provides a computer readable storage medium, storing a computer program, and the program, when executed by a processor, implements the VSP-based depth domain seismic profile horizon calibration method provided by the present disclosure.

Through the technical solution provided by the present disclosure, the present disclosure at least has the following technical effects:
the accurate upgoing wave data is extracted from the seismic data by performing seismic data acquisition on the borehole depth domain, performing first arrival picking on the seismic data and performing wavefield separation and deconvolution, corresponding formation reflection information is determined according to the upgoing wave data so as to obtain a zero offset profile of the depth domain, therefore, the depth-domain profile is accurately calibrated, an error of a time-domain corridor in time-depth conversion in prior art is effectively overcome, and the calibration accuracy of the depth domain is improved.

Other features and advantages of the embodiments of the present disclosure will be illustrated in detail in the following part of specific implementations.

### Brief Description of Drawings

The accompanying drawings are used to provide further understanding of embodiments of the present disclosure, and form part of the specification, and are used to explain the embodiments of the present disclosure together with the following specific implementations, but they do not constitute a limitation to the embodiments of the present disclosure. In the accompanying drawings:
Fig. 1 is a flow diagram of a specific implementation of a VSP-based depth domain seismic profile horizon calibration method provided by an embodiment of the present disclosure.
Fig. 2 is a schematic diagram of VSP wavefield data in a VSP-based depth domain seismic profile horizon calibration method provided by an embodiment of the present disclosure.
Fig. 3 is a flow diagram of a specific implementation of obtaining upgoing wave data in a VSP-based depth domain seismic profile horizon calibration method provided by an embodiment of the present disclosure.
Fig. 4 is a schematic diagram of upgoing wave data in a VSP-based depth domain seismic profile horizon calibration method provided by an embodiment of the present disclosure.
Fig. 5 is schematic contrast diagram of synthetic records (three in the middle) with different resolutions in a depth domain obtained by a VSP depth-domain zero offset profile (right) and well-logging data (left) in a VSP-based depth domain seismic profile horizon calibration method provided by an embodiment of the present disclosure.
Fig. 6 is a flow diagram of a specific implementation of generating a calibration result in a VSP-based depth domain seismic profile horizon calibration method provided by an embodiment of the present disclosure.
Fig. 7 is a schematic contrast diagram of embedding a well-logging depth-domain synthetic record and a VSP depth-domain zero offset profile into a surface seismic profile in a VSP-based depth domain seismic profile horizon calibration method provided by an embodiment of the present disclosure.
Fig. 8 is a schematic structural diagram of a VSP-based depth domain seismic profile horizon calibration apparatus provided by an embodiment of the present disclosure.

### Detailed Description of the Embodiments

The specific implementations of embodiments of the present disclosure are illustrated in detail below in combination with the accompanying drawings. It should be understood that the specific implementations described herein are merely used to illustrate and explain the embodiments of the present disclosure and are not used to limit the embodiments of the present disclosure.

Terms "system" and "network" in the embodiments of the present disclosure may be used interchangeably. "A plurality of" means two or more, and in view of this, "a plurality of" may also be understood as "at least two" in the embodiments of the present disclosure. "And/or" describes an association relationship of associated objects, indicating that there may be three kinds of relationships, for example, A and/or B may indicate that: A exists alone, both A and B exist, and B exists alone. In addition, the character "/", unless otherwise specified, generally indicates that the associated objects before and after the character is in an "or" relationship. In addition, it needs to be understood that in the description of the embodiments of the present disclosure, words "first", "second", etc. are merely for the purpose of distinguishing and are not to be understood as indicating or suggesting relative importance, nor as indicating or suggesting an order.

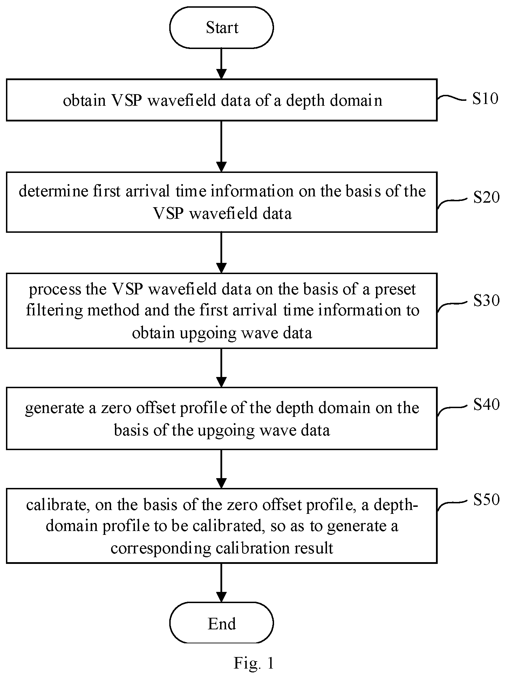

Please referring to Fig. 1, an embodiment of the present disclosure provides a VSP-based depth domain seismic profile horizon calibration method, including:
S10) obtaining VSP wavefield data of a depth domain;
S20) determining first arrival time information on the basis of the VSP wavefield data;
S30) processing the VSP wavefield data on the basis of a preset filtering method and the first arrival time information to obtain upgoing wave data;
S40) generating a zero offset profile of the depth domain on the basis of the upgoing wave data; and
S50) calibrating, on the basis of the zero offset profile, a depth-domain profile to be calibrated, so as to generate a corresponding calibration result.

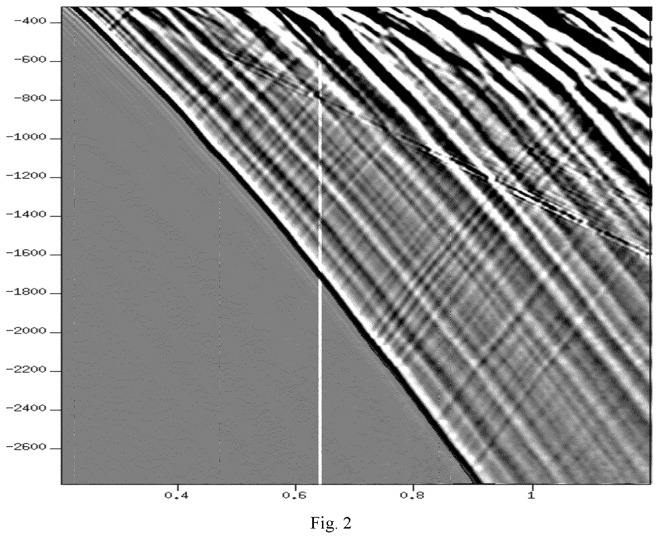

In a possible implementation, in order to accurately calibrate a formation of the depth domain, firstly, borehole seismic wavefield data in the depth domain is obtained, and data detected by a borehole acquisition instrument is transmitted and collected by arranging the borehole acquisition instrument in the formation of the depth domain and receiving and connecting the borehole acquisition instrument through a geophone or optical cable reception, and then, the corresponding seismic wavefield data is collected in the formation of the depth domain by using an excitation of an explosive seismic source or a vibroseis on the surface or in a well. Then, existing first arrival picking methods are used to analyze the above seismic wave data to obtain the corresponding first arrival time information, the existing first arrival picking method include but are not limited to a maximum energy method, a Short Term Average/Long Term Average (STA/LTA) method, a cross-correlation method, a phase tracking method and so on. Fig. 2 is a schematic diagram of VSP wavefield data provided by an embodiment of the present disclosure, and the corresponding first arrival time information may be obtained through the seismic wave data.

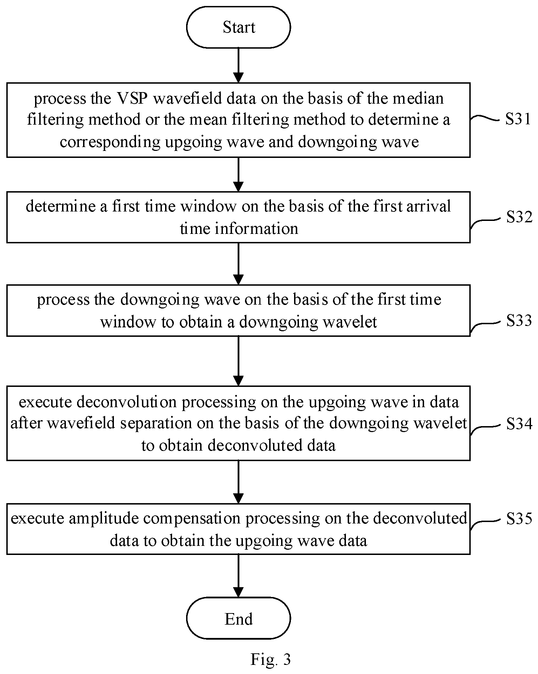

At this time, the seismic wave data is further analyzed and processed. Please referring to Fig. 3, in the embodiment of the present disclosure, the preset filtering method includes a median filtering method and a mean filtering method, and processing the VSP wavefield data on the basis of the preset filtering method and the first arrival time information to obtain the upgoing wave data includes:
S31) processing the VSP wavefield data on the basis of the median filtering method or the mean filtering method to determine a corresponding upgoing wave and downgoing wave;
S32) determining a first time window on the basis of the first arrival time information;
S33) processing the downgoing wave on the basis of the first time window to obtain a downgoing wavelet;
S34) executing deconvolution processing on the upgoing wave in data after wavefield separation on the basis of the downgoing wavelet to obtain deconvoluted data; and
S35) executing amplitude compensation processing on the deconvoluted data to obtain the upgoing wave data.

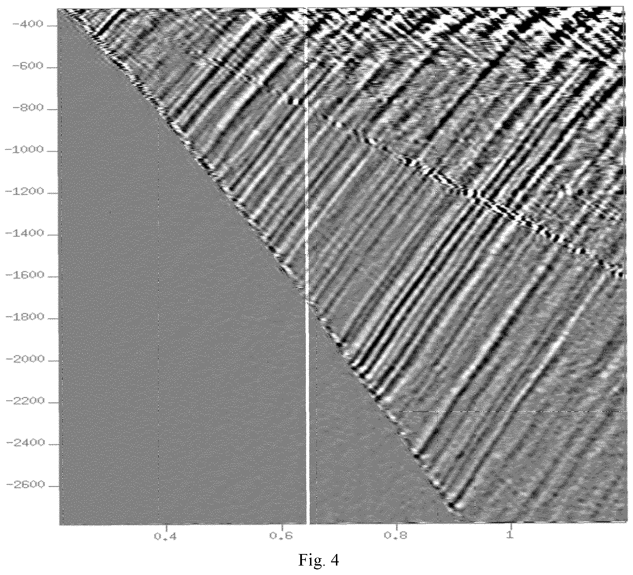

In a possible implementation, firstly, the above seismic wave data is predicted according to the median filtering method or the mean filtering method, the corresponding upgoing wave and downgoing wave are determined, then, the first time window is determined according to the first arrival time information, corresponding data are intercepted in the downgoing wave through the first time window to obtain the corresponding downgoing wavelet, at this time, deconvolution processing is further performed on the upgoing wave in the data after wavefield separation according to the above downgoing wavelet to suppress the influence of multiple waves and obtain the corresponding deconvoluted data, and amplitude compensation processing is executed on the above deconvoluted data so as to remove the amplitude change influence caused by spherical spreading and obtain upgoing wavefield data. Please referring to Fig. 4 which is a schematic diagram of upgoing wave data provided by an embodiment of the present disclosure.

In the embodiment of the present disclosure, corresponding filtering and denoising processing are performed on both the obtained upgoing wave and downgoing wave of the seismic wave data, so that the more accurate upgoing wave data is obtained, accurate data support is provided for subsequent analysis of relevant information of the depth domain, and accuracy of subsequent depth-domain formation calibration is improved effectively.

In the embodiment of the present disclosure, generating the zero offset profile of the depth domain on the basis of the upgoing wave data includes: determining upgoing wave amplitude information of the depth domain on the basis of the upgoing wave data; and processing the upgoing wave amplitude information on the basis of a preset multichannel filtering method to obtain the zero offset profile of the depth domain.

In a possible implementation, after the above upgoing wave data is obtained, the upgoing wave amplitude information of the depth domain is further determined. And determining the upgoing wave amplitude information of the depth domain on the basis of the upgoing wave data includes: determining a plurality of preset output depth positions in the depth domain; determining a second time window on the basis of the first arrival time information; and processing the upgoing wave data on the plurality of preset output depth positions on the basis of the second time window to obtain the upgoing wave amplitude information.

After an upgoing wavefield is obtained, for each output depth position i in m depths of upgoing wave records, an upgoing wave amplitude Aᵢⱼ is further extracted by taking a short time window downward along the first arrival time of the upgoing wavefield, wherein j is a trace number relative to a depth position above the depth position i. According to a size of a depth interval of an input seismic trace and non-uniformity of a true vertical depth under an inclined well condition, an output depth may be deeply encrypted or interpolated to obtain a higher and more uniform depth sampling density.

Furthermore, in the embodiment of the present disclosure, processing the upgoing wave amplitude information on the basis of the preset multichannel filtering method to obtain the zero offset profile of the depth domain includes: extracting the upgoing wave amplitude information to obtain a plurality of corresponding depth-domain data, wherein the upgoing wave amplitude information is in one-to-one correspondence to the plurality of preset output depth positions; and processing the plurality of depth-domain data on the basis of the preset multichannel filtering method to obtain the zero offset profile of the depth domain.

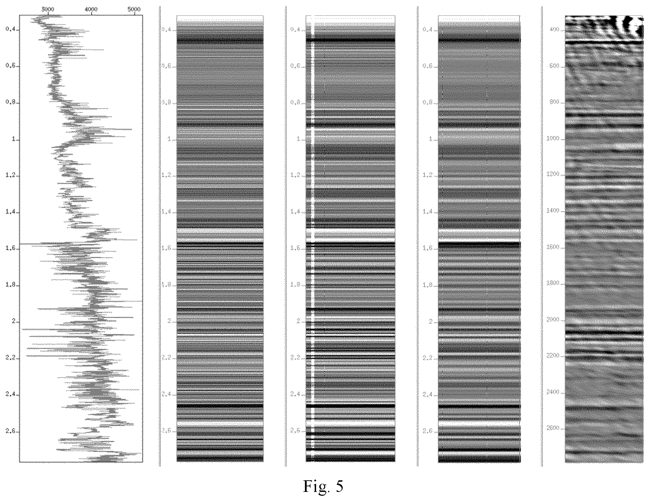

In a possible implementation, after the upgoing wave amplitude information is obtained, n depth-domain record traces corresponding to m depth points are generated through the upgoing wave amplitude information, the depth-domain record traces are further processed through the preset multichannel filtering method so as to improve a signal to noise ratio, for example, the preset multichannel filtering method is a median filtering method or other multichannel filtering methods, and a corresponding zero offset profile of the depth domain is obtained. At this time, a calibration result for the current formation of the depth domain is generated according to the profile information, please referring to Fig. 5 which is a schematic contrast diagram of synthetic records (three in the middle) with different resolutions in a depth domain obtained by a VSP depth-domain zero offset profile(right) and well-logging data (left) provided by an embodiment of the present disclosure.

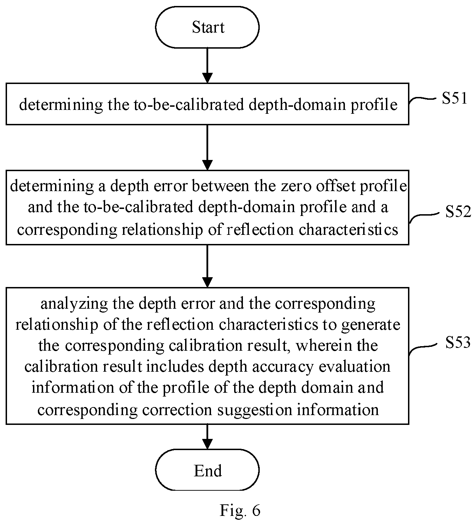

Please referring to Fig. 6, in the embodiment of the present disclosure, calibrating, on the basis of the zero offset profile, a depth-domain profile to be calibrated, so as to generate a corresponding calibration result includes:
S51) determining the to-be-calibrated depth-domain profile;
S52) determining a depth error between the zero offset profile and the to-be-calibrated depth-domain profile and a corresponding relationship of reflection characteristics; and
S53) analyzing the depth error and the corresponding relationship of the reflection characteristics to generate the corresponding calibration result, wherein the calibration result includes depth accuracy evaluation information of the profile of the depth domain and corresponding correction suggestion information.

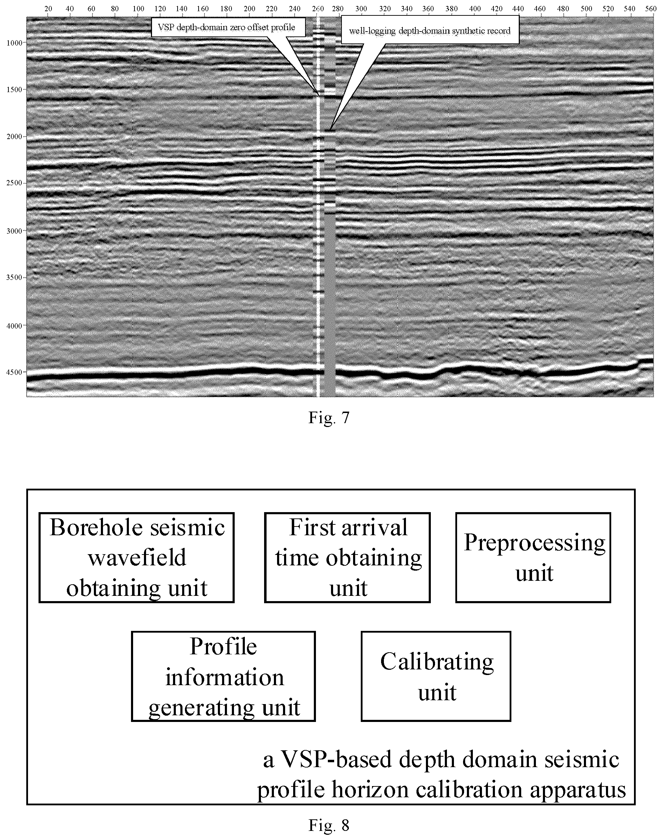

In a possible implementation, firstly, the to-be-calibrated depth-domain profile is determined, then, the zero offset profile of the depth domain is embedded in the to-be-calibrated depth-domain profile (see Fig. 7), so that a corresponding relationship of reflection characteristics of shallow, middle and deep horizons between the zero offset profile and the to-be-calibrated depth-domain profile and the depth error are analyzed, and depth accuracy evaluation information and depth correction suggestion information of the corresponding depth-domain profile are obtained.

In the embodiment of the present disclosure, formation reflection information is obtained by travel time along each depth upgoing wave of the depth domain, the zero offset depth profile of VSP is obtained, the to-be-calibrated depth profile is accurately calibrated, an error of a time-domain corridor in time-depth conversion in the prior art is effectively overcome, depth calibration accuracy is obviously improved, accurate data support is provided for subsequent interpretation of a reservoir depth domain, the depth domain interpretation accuracy is improved, and actual needs of technicists are met.

An apparatus for calibrating a formation of a depth domain provided by an embodiment of the present disclosure is illustrated below in combination with accompanying drawings.

Please referring to Fig. 8, based on the same inventive conception, an embodiment of the present disclosure provides a VSP-based depth domain seismic profile horizon calibration apparatus. The apparatus includes: a borehole seismic wavefield obtaining unit, configured to obtain VSP wavefield data of a depth domain; a first arrival time obtaining unit, configured to determine first arrival time information on the basis of the VSP wavefield data; a preprocessing unit, configured to process the VSP wavefield data on the basis of a preset filtering method and the first arrival time information to obtain upgoing wave data; a profile information generating unit, configured to generate a zero offset profile of the depth domain on the basis of the upgoing wave data; and a calibrating unit, configured to calibrate, on the basis of the zero offset profile, a depth-domain profile to be calibrated, so as to generate a corresponding calibration result.

In the embodiment of the present disclosure, the preset filtering method includes a median filtering method and a mean filtering method, and the preprocessing unit includes: a wavefield separating module, configured to process the VSP wavefield data on the basis of the median filtering method or the mean filtering method to determine a corresponding upgoing wave and downgoing wave; a first time window determining module, configured to determine a first time window on the basis of the first arrival time information; a wavelet obtaining module, configured to process the downgoing wave on the basis of the first time window to obtain a downgoing wavelet; a wavelet deconvolution module, configured to execute deconvolution processing on the upgoing wave in data after wavefield separation on the basis of the downgoing wavelet to obtain deconvoluted data; and an amplitude compensating module, configured to execute amplitude compensation processing on the deconvoluted data to obtain the upgoing wave data.

In the embodiment of the present disclosure, the profile information generating unit includes: a depth domain amplitude value extracting module, configured to determine upgoing wave amplitude information of the depth domain on the basis of the upgoing wave data; and a filtering module, configured to process the upgoing wave amplitude information on the basis of a preset multichannel filtering method to obtain the zero offset profile of the depth domain.

In the embodiment of the present disclosure, the depth domain amplitude value extracting module is specifically configured to: determine a plurality of preset output depth positions in the depth domain; determine a second time window on the basis of the first arrival time information; and process the upgoing wave data on the plurality of preset output depth positions on the basis of the second time window to obtain the upgoing wave amplitude information.

In the embodiment of the present disclosure, the filtering module is specifically configured to: analyze the upgoing wave amplitude information to obtain a plurality of corresponding depth-domain data, wherein the upgoing wave amplitude information is in one-to-one correspondence to the plurality of preset output depth positions; and process the plurality of depth-domain data on the basis of the preset multichannel filtering method to obtain the zero offset profile of the depth domain.

In the embodiment of the present disclosure, the calibrating unit is specifically configured to: determine the to-be-calibrated depth domain profile; determine a depth error between the zero offset profile and the to-be-calibrated depth-domain profile and a corresponding relationship of reflection characteristics; and analyze the depth error and the corresponding relationship of the reflection characteristics to generate the corresponding calibration result, wherein the calibration result includes depth accuracy evaluation information of the depth-domain profile and corresponding correction suggestion information.

Furthermore, an embodiment of the present disclosure further provides a computer readable storage medium, storing a computer program, and the program, when executed by a processor, implements the VSP-based depth domain seismic profile horizon calibration method of the present disclosure.

Those skilled in the art may understand that the implementation of all or part of steps in the methods of the above embodiments may be completed by instructing, through a program, relevant hardware, the program is stored in a storage medium, and includes a plurality of instructions to cause a single chip microcomputer, a chip, or a processor to execute all or part of the steps of the methods described in the various embodiments of the present application. The aforementioned storage mediums include: a USB flash disk, a mobile hard disk, a read-only memory (ROM), a random access memory (RAM), a diskette or an optical disk and various other media that may store program codes.

## Claims

1. A VSP-based depth domain seismic profile horizon calibration method, comprising:
obtaining (S10) vertical seismic profile VSP wavefield data of a depth domain with a borehole seismic wavefield obtaining unit;
determining (S20) first arrival time information on the basis of the VSP wavefield data;
processing (S30) the VSP wavefield data on the basis of a preset filtering method and the first arrival time information to obtain upgoing wave data;
generating (S40) a zero-offset profile of the depth domain on the basis of the upgoing wave data; and
calibrating (S50), on the basis of the zero offset profile, a depth-domain profile to be calibrated, so as to generate a corresponding calibration result;
**characterized in that** the generating (S40) the zero offset profile of the depth domain on the basis of the upgoing wave data comprises:
determining a plurality of preset output depth positions in the depth domain;
determining a second time window for processing the upgoing wave on the basis of the first arrival time information;
extracting the amplitude of the upgoing wave data on the plurality of preset output depth positions on the basis of the second time window to obtain the upgoing wave amplitude information;
extracting the upgoing wave amplitude information to obtain a plurality of corresponding depth-domain data, wherein the upgoing wave amplitude information is in one-to-one correspondence to the plurality of preset output depth positions; and
processing the plurality of depth-domain data on the basis of the preset multichannel filtering method to obtain the zero offset profile of the depth domain.

2. The method according to claim 1, wherein the preset filtering method comprises a median filtering method and a mean filtering method; and
processing the VSP wavefield data on the basis of a preset filtering method and the first arrival time information to obtain upgoing wave data comprises:
processing (S31) the VSP wavefield data on the basis of the median filtering method or the mean filtering method to determine a corresponding upgoing wave and downgoing wave;
determining (S32) a first time window for processing the downgoing wave on the basis of the first arrival time information;
intercepting data from the downgoing wave on the basis of the first time window to obtain a downgoing wavelet;
executing (S34) deconvolution processing on the upgoing wave in data after wavefield separation on the basis of the downgoing wavelet to obtain deconvoluted data; and
executing (S35) amplitude compensation processing on the deconvoluted data to obtain the upgoing wave data.

3. The method according to claim 1, wherein calibrating, on the basis of the zero offset profile, a depth-domain profile to be calibrated, so as to generate a corresponding calibration result, comprises:
determining (S51) the to-be-calibrated depth-domain profile;
determining (S52) a depth error between the zero offset profile and the to-be-calibrated depth-domain profile and a corresponding relationship of reflection characteristics; and
analyzing (S53) the depth error and the corresponding relationship of the reflection characteristics to generate the corresponding calibration result, wherein the calibration result comprises depth accuracy evaluation information of the profile of the depth domain and corresponding correction suggestion information.

4. A VSP-based depth domain seismic profile horizon calibration apparatus, comprising:
a borehole seismic wavefield obtaining unit, configured to obtain VSP wavefield data of a depth domain;
a first arrival time obtaining unit, configured to determine first arrival time information on the basis of the VSP wavefield data;
a preprocessing unit, configured to process the VSP wavefield data on the basis of a preset filtering method and the first arrival time information to obtain upgoing wave data;
a profile information generating unit, configured to generate a zero offset profile of the depth domain on the basis of the upgoing wave data; and
a calibrating unit, configured to calibrate, on the basis of the zero offset profile, a depth-domain profile to be calibrated, so as to generate a corresponding calibration result;
**characterized in that** the profile information generating unit comprises:
a depth domain amplitude value extracting module, configured to: determine a plurality of preset output depth positions in the depth domain; determine a second time window for processing the upgoing wave on the basis of the first arrival time information; and extract the amplitude of the upgoing wave data on the plurality of preset output depth positions on the basis of the second time window to obtain the upgoing wave amplitude information; and
a filtering module, configured to: extract the upgoing wave amplitude information to obtain a plurality of corresponding depth-domain data, wherein the upgoing wave amplitude information is in one-to-one correspondence to the plurality of preset output depth positions; and process the plurality of depth-domain data on the basis of the preset multichannel filtering method to obtain the zero offset profile of the depth domain.

5. The apparatus according to claim 4, wherein the preset filtering method comprises a median filtering method and a mean filtering method, and the preprocessing unit comprises:
a wavefield separating module, configured to process the VSP wavefield data on the basis of the median filtering method or the mean filtering method to determine a corresponding upgoing wave and downgoing wave;
a first time window determining module, configured to determine a first time window for processing the downgoing wave on the basis of the first arrival time information;
a wavelet obtaining module, configured to intercept data from the downgoing wave on the basis of the first time window to obtain a downgoing wavelet;
a wavelet deconvolution module, configured to executing deconvolution processing on the upgoing wave in data after wavefield separation on the basis of the downgoing wavelet to obtain deconvoluted data; and
an amplitude compensating module, configured to execute amplitude compensation processing on the deconvoluted data to obtain the upgoing wave data.

6. The apparatus according to claim 4, wherein the calibrating unit is specifically configured to:
determine the to-be-calibrated depth-domain profile;
determine a depth error between the zero offset profile and the to-be-calibrated depth-domain profile and a corresponding relationship of reflection characteristics; and
analyze the depth error and the corresponding relationship of the reflection characteristics to generate the corresponding calibration result, wherein the calibration result comprises depth accuracy evaluation information of the depth-domain profile and corresponding correction suggestion information.

7. A computer readable storage medium, storing a computer program, wherein the program, when executed by a processor, implements the VSP-based depth domain seismic profile horizon calibration method according to any of claims 1 to 3.

## Patentansprüche

1. VSP-basiertes seismisches Tiefendomänenprofil-Horizontkalibrierungsverfahren, umfassend:
Erhalten (S10) von vertikalen seismischen Profil, VSP,-Wellenfelddaten einer Tiefendomäne mit einer Bohrloch-seismischen Wellenfelderhaltungseinheit;
Bestimmen (S20) von ersten Ankunftszeitinformationen aufgrund der VSP-Wellenfelddaten;
Verarbeiten (S30) der VSP-Wellenfelddaten aufgrund eines vorgegebenen Filterungsverfahrens und der ersten Ankunftszeitinformationen, um aufsteigende Wellendaten zu erhalten;
Erzeugen (S40) eines Null-Versatz-Profils der Tiefendomäne aufgrund der aufsteigenden Wellendaten; und
Kalibrieren (S50), aufgrund des Null-Versatz-Profils, eines Tiefendomänenprofils, das kalibriert werden soll, um ein entsprechendes Kalibrierungsergebnis zu erzeugen;
**dadurch gekennzeichnet, dass** das Erzeugen (S40) des Null-Versatz-Profils der Tiefendomäne aufgrund der aufsteigenden Wellendaten umfasst:
Bestimmen einer Vielzahl von vorgegebenen Ausgangstiefenpositionen in der Tiefendomäne;
Bestimmen eines zweiten Zeitfensters zur Verarbeitung der aufsteigenden Welle aufgrund der ersten Ankunftszeitinformationen;
Extrahieren der Amplitude der aufsteigenden Wellendaten an der Vielzahl von vorgegebenen Ausgangstiefenpositionen aufgrund des zweiten Zeitfensters, um die aufsteigenden Wellenamplitudeninformationen zu erhalten;
Extrahieren der aufsteigenden Wellenamplitudeninformationen, um eine Vielzahl von entsprechenden Tiefendomänendaten zu erhalten, worin die aufsteigenden Wellenamplitudeninformationen sich in einer Eins-zu-eins-Übereinstimmung mit der Vielzahl von vorgegebenen Ausgangstiefenpositionen befinden; und
Verarbeiten der Vielzahl von Tiefendomänendaten aufgrund des vorgegebenen Mehrkanal-Filterungsverfahrens, um das Null-Versatz-Profil der Tiefendomäne zu erhalten.

2. Verfahren nach Anspruch 1, worin das vorgegebene Filterungsverfahren ein Medianfilterungsverfahren und ein Mittelwertfilterungsverfahren umfasst; und
das Verarbeiten der VSP-Wellenfelddaten aufgrund eines vorgegebenen Filterungsverfahrens und der ersten Ankunftszeitinformationen, um aufsteigende Wellendaten zu erhalten, umfasst:
Verarbeiten (S31) der VSP-Wellenfelddaten aufgrund des Medianfilterungsverfahrens oder des Mittelwertfilterungsverfahrens, um eine entsprechende aufsteigende Welle und abwärts laufende Welle zu bestimmen;
Bestimmen (S32) eines ersten Zeitfensters zur Verarbeitung der abwärts laufenden Welle aufgrund der ersten Ankunftszeitinformationen;
Abfangen von Daten von der abwärts laufenden Welle aufgrund des ersten Zeitfensters, um ein abwärts laufendes Wavelet zu erhalten;
Durchführen (S34) von Dekonvolutionsverarbeitung an der aufsteigenden Welle in Daten nach Wellenfeldseparation aufgrund des abwärts laufenden Wavelets, um dekonvulierte Daten zu erhalten; und
Durchführen (S35) von Amplitudenausgleichsverarbeitung an den dekonvulierten Daten, um die aufsteigenden Wellendaten zu erhalten.

3. Verfahren nach Anspruch 1, worin das Kalibrieren, aufgrund des Null-Versatz-Profils, eines Tiefendomänenprofils, das kalibriert werden soll, um ein entsprechendes Kalibrierungsergebnis zu erzeugen, umfasst:
Bestimmen (S51) des zu kalibrierenden Tiefendomänenprofils;
Bestimmen (S52) eines Tiefenfehlers zwischen dem Null-Versatz-Profil und dem zu kalibrierenden Tiefendomänenprofil und einer entsprechenden Beziehung von Reflexionsmerkmalen; und
Analysieren (S53) des Tiefenfehlers und der entsprechenden Beziehung der Reflexionsmerkmale, um das entsprechende Kalibrierungsergebnis zu erzeugen, worin das Kalibrierungsergebnis Tiefengenauigkeitseinschätzungsinformationen des Profils der Tiefendomäne und entsprechende Korrekturvorschlagsinformationen umfasst.

4. VSP-basierte seismische Tiefendomänenprofil-Horizontkalibrierungsvorrichtung, umfassend:
eine Bohrloch-seismische Wellenfelderhaltungseinheit, die dazu eingerichtet ist, VSP-Wellenfelddaten einer Tiefendomäne zu erhalten;
eine erste Ankunftszeiterhaltungseinheit, die dazu eingerichtet ist, erste Ankunftszeitinformationen aufgrund der VSP-Wellenfelddaten zu bestimmen;
eine Vorverarbeitungseinheit, die dazu eingerichtet ist, die VSP-Wellenfelddaten aufgrund eines vorgegebenen Filterungsverfahrens und der ersten Ankunftszeitinformationen zu verarbeiten, um aufsteigende Wellendaten zu erhalten;
eine Profilinformationserzeugungseinheit, die dazu eingerichtet ist, ein Null-Versatz-Profil der Tiefendomäne aufgrund der aufsteigenden Wellendaten zu erzeugen; und
eine Kalibrierungseinheit, die dazu eingerichtet ist, aufgrund des Null-Versatz-Profils, ein Tiefendomänenprofil, das kalibriert werden soll, zu kalibrieren, um ein entsprechendes Kalibrierungsergebnis zu erzeugen;
**dadurch gekennzeichnet, dass** die Profilinformationserzeugungseinheit umfasst:
ein Tiefendomänenamplitudenwertextrahiermodul, das dazu eingerichtet ist: eine Vielzahl von vorgegebenen Ausgangstiefenpositionen in der Tiefendomäne zu bestimmen; ein zweites Zeitfenster zur Verarbeitung der aufsteigenden Welle aufgrund der ersten Ankunftszeitinformationen zu bestimmen; und die Amplitude der aufsteigenden Wellendaten an der Vielzahl von vorgegebenen Ausgangstiefenpositionen aufgrund des zweiten Zeitfensters zu extrahieren, um die aufsteigenden Wellenamplitudeninformationen zu erhalten; und
ein Filterungsmodul, das dazu eingerichtet ist: die aufsteigenden Wellenamplitudeninformationen zu extrahieren, um eine Vielzahl von entsprechenden Tiefendomänendaten zu erhalten, worin die aufsteigenden Wellenamplitudeninformationen sich in einer Eins-zu-eins-Übereinstimmung mit der Vielzahl von vorgegebenen Ausgangstiefenpositionen befinden; und die Vielzahl von Tiefendomänendaten aufgrund des vorgegebenen Mehrkanal-Filterungsverfahrens zu verarbeiten, um das Null-Versatz-Profil der Tiefendomäne zu erhalten.

5. Vorrichtung nach Anspruch 4, worin das vorgegebene Filterungsverfahren ein Medianfilterungsverfahren und ein Mittelwertfilterungsverfahren umfasst, und die Vorverarbeitungseinheit umfasst:
ein Wellenfeldseparationsmodul, das dazu eingerichtet ist, die VSP-Wellenfelddaten aufgrund des Medianfilterungsverfahrens oder des Mittelwertfilterungsverfahrens zu verarbeiten, um eine entsprechende aufsteigende Welle und abwärts laufende Welle zu bestimmen;
ein erstes Zeitfensterbestimmungsmodul, das dazu eingerichtet ist, ein erstes Zeitfenster zur Verarbeitung der abwärts laufenden Welle aufgrund der ersten Ankunftszeitinformationen zu bestimmen;
ein Wavelet-Erhaltungsmodul, das dazu eingerichtet ist, Daten von der abwärts laufenden Welle aufgrund des ersten Zeitfensters abzufangen, um ein abwärts laufendes Wavelet zu erhalten;
ein Wavelet-Dekonvolutionsmodul, das dazu eingerichtet ist, Dekonvolutionsverarbeitung an der aufsteigenden Welle in Daten nach Wellenfeldseparation aufgrund des abwärts laufenden Wavelets durchzuführen, um dekonvulierte Daten zu erhalten; und
ein Amplitudenausgleichsmodul, das dazu eingerichtet ist, Amplitudenausgleichsverarbeitung an den dekonvulierten Daten durchzuführen, um die aufsteigenden Wellendaten zu erhalten.

6. Vorrichtung nach Anspruch 4, worin die Kalibrierungseinheit spezifisch dazu eingerichtet ist:
das zu kalibrierende Tiefendomänenprofil zu bestimmen;
einen Tiefenfehler zwischen dem Null-Versatz-Profil und dem zu kalibrierenden Tiefendomänenprofil und eine entsprechende Beziehung von Reflexionsmerkmalen zu bestimmen; und
den Tiefenfehler und die entsprechende Beziehung der Reflexionsmerkmale zu analysieren, um das entsprechende Kalibrierungsergebnis zu erzeugen, worin das Kalibrierungsergebnis Tiefengenauigkeitseinschätzungsinformationen des Tiefendomänenprofils und entsprechende Korrekturvorschlagsinformationen umfasst.

7. Computerlesbares Speichermedium, das ein Computerprogramm speichert, worin das Programm, wenn es von einem Prozessor ausgeführt wird, das VSP-basierte seismische Tiefendomänenprofil-Horizontkalibrierungsverfahren nach einem der Ansprüche 1 bis 3 implementiert.

## Revendications

1. Procédé d'étalonnage d'horizon de profil sismique de domaine de profondeur basé sur VSP, comprenant :
l'obtention (S10) de données de champ d'onde VSP de profil sismique vertical d'un domaine de profondeur avec une unité d'obtention de champ d'onde sismique de puits ;
la détermination (S20) des premières informations d'heure d'arrivée sur la base des données de champ d'onde VSP ;
le traitement (S30) des données de champ d'onde VSP sur la base d'un procédé de filtrage prédéfini et des premières informations d'heure d'arrivée pour obtenir des données d'onde montante ;
la génération (S40) d'un profil de décalage zéro du domaine de profondeur sur la base des données d'onde montante ; et
l'étalonnage (S50), sur la base du profil de décalage zéro, d'un profil de domaine de profondeur à étalonner, de manière à générer un résultat d'étalonnage correspondant ;
**caractérisé en ce que** la génération (S40) du profil de décalage zéro du domaine de profondeur sur la base des données d'onde montante comprend :
la détermination d'une pluralité de positions de profondeur de sortie prédéfinies dans le domaine de profondeur ;
la détermination d'une seconde fenêtre temporelle pour traiter l'onde montante sur la base des premières informations d'heure d'arrivée ;
l'extraction de l'amplitude des données d'onde montante sur la pluralité de positions de profondeur de sortie prédéfinies sur la base de la seconde fenêtre temporelle pour obtenir les informations d'amplitude d'onde montante ;
l'extraction des informations d'amplitude d'onde montante pour obtenir une pluralité de données de domaine de profondeur correspondantes, dans lequel les informations d'amplitude d'onde montante sont en correspondance biunivoque avec la pluralité de positions de profondeur de sortie prédéfinies ; et
le traitement de la pluralité de données de domaine de profondeur sur la base du procédé de filtrage multicanal prédéfini pour obtenir le profil de décalage zéro du domaine de profondeur.

2. Procédé selon la revendication 1, dans lequel le procédé de filtrage prédéfini comprend un procédé de filtrage médian et un procédé de filtrage moyen ; et
le traitement des données de champ d'onde VSP sur la base d'un procédé de filtrage prédéfini et des premières informations d'heure d'arrivée pour obtenir des données d'onde montante comprend :
le traitement (S31) des données de champ d'onde VSP sur la base du procédé de filtrage médian ou du procédé de filtrage moyen pour déterminer une onde montante et une onde descendante correspondantes ;
la détermination (S32) d'une première fenêtre temporelle pour traiter l'onde descendante sur la base des premières informations d'heure d'arrivée ;
l'interception des données de l'onde descendante sur la base de la première fenêtre temporelle pour obtenir une ondelette descendante ;
l'exécution (S34) d'un traitement de déconvolution sur l'onde montante dans les données après la séparation du champ d'onde sur la base de l'ondelette descendante pour obtenir des données déconvoluées ; et
l'exécution (S35) d'un traitement de compensation d'amplitude sur les données déconvoluées pour obtenir les données d'onde montante.

3. Procédé selon la revendication 1, dans lequel l'étalonnage, sur la base du profil de décalage zéro, d'un profil de domaine de profondeur à étalonner, de manière à générer un résultat d'étalonnage correspondant, comprend :
la détermination (S51) du profil du domaine de profondeur à étalonner ;
la détermination (S52) d'une erreur de profondeur entre le profil de décalage zéro et le profil de domaine de profondeur à étalonner et une relation correspondante de caractéristiques de réflexion ; et
l'analyse (S53) de l'erreur de profondeur et de la relation correspondante des caractéristiques de réflexion pour générer le résultat d'étalonnage correspondant, dans lequel le résultat d'étalonnage comprend des informations d'évaluation de précision de profondeur du profil du domaine de profondeur et des informations de suggestion de correction correspondantes.

4. Appareil d'étalonnage d'horizon de profil sismique de domaine de profondeur basé sur VSP, comprenant :
une unité d'obtention de champ d'onde sismique de trou de forage, configurée pour obtenir des données de champ d'onde VSP d'un domaine de profondeur ;
une première unité d'obtention de temps d'arrivée, configurée pour déterminer des premières informations de temps d'arrivée sur la base des données de champ d'onde VSP ;
une unité de prétraitement, configurée pour traiter les données de champ d'onde VSP sur la base d'un procédé de filtrage prédéfini et des premières informations d'heure d'arrivée pour obtenir des données d'onde montante ;
une unité de génération d'informations de profil, configurée pour générer un profil de décalage zéro du domaine de profondeur sur la base des données d'onde montante ; et
une unité d'étalonnage, configurée pour étalonner, sur la base du profil de décalage zéro, un profil de domaine de profondeur à étalonner, de manière à générer un résultat d'étalonnage correspondant ;
**caractérisé en ce que** l'unité de génération d'informations de profil comprend :
un module d'extraction de valeur d'amplitude de domaine de profondeur, configuré pour : déterminer une pluralité de positions de profondeur de sortie prédéfinies dans le domaine de profondeur ; la détermination d'une seconde fenêtre temporelle pour traiter l'onde montante sur la base des premières informations de temps d'arrivée ; et l'extraction de l'amplitude des données d'onde montante sur la pluralité de positions de profondeur de sortie prédéfinies sur la base de la seconde fenêtre temporelle pour obtenir les informations d'amplitude d'onde montante ; et
un module de filtrage, configuré pour : extraire les informations d'amplitude d'onde montante pour obtenir une pluralité de données de domaine de profondeur correspondantes, dans lequel les informations d'amplitude d'onde montante sont en correspondance biunivoque avec la pluralité de positions de profondeur de sortie prédéfinies ; et le traitement de la pluralité de données de domaine de profondeur sur la base du procédé de filtrage multicanal prédéfini pour obtenir le profil de décalage zéro du domaine de profondeur.

5. Appareil selon la revendication 4, dans lequel le procédé de filtrage prédéfini comprend un procédé de filtrage médian et un procédé de filtrage moyen, et l'unité de prétraitement comprend :
un module de séparation de champ d'onde, configuré pour traiter les données de champ d'onde VSP sur la base du procédé de filtrage médian ou du procédé de filtrage moyen pour déterminer une onde montante et une onde descendante correspondantes ;
un premier module de détermination de fenêtre temporelle, configuré pour déterminer une première fenêtre temporelle pour traiter l'onde descendante sur la base des premières informations d'heure d'arrivée ;
un module d'obtention d'ondelette, configuré pour intercepter des données de l'onde descendante sur la base de la première fenêtre temporelle pour obtenir une ondelette descendante ;
un module de déconvolution d'ondelettes, configuré pour exécuter un traitement de déconvolution sur l'onde montante dans des données après une séparation de champ d'onde sur la base de l'ondelette descendante pour obtenir des données déconvoluées ; et
un module de compensation d'amplitude, configuré pour exécuter un traitement de compensation d'amplitude sur les données déconvoluées pour obtenir les données d'onde montante.

6. Appareil selon la revendication 4, dans lequel l'unité d'étalonnage est configurée spécifiquement pour :
déterminer le profil du domaine de profondeur à étalonner ;
déterminer une erreur de profondeur entre le profil de décalage zéro et le profil de domaine de profondeur à étalonner et une relation correspondante de caractéristiques de réflexion ; et
analyser l'erreur de profondeur et la relation correspondante des caractéristiques de réflexion pour générer le résultat d'étalonnage correspondant, dans lequel le résultat d'étalonnage comprend des informations d'évaluation de précision de profondeur du profil de domaine de profondeur et des informations de suggestion de correction correspondantes.

7. Support de stockage lisible par ordinateur, stocker un programme informatique, dans lequel le programme, lorsqu'il est exécuté par un processeur, met en œuvre le procédé d'étalonnage d'horizon de profil sismique de domaine de profondeur basé sur VSP selon l'une quelconque des revendications 1 à 3.
